# EUROPÄISCHE PATENTSCHRIFT

(11) **EP 0 701 977 B1**
(45) Veröffentlichungstag und Bekanntmachung des Hinweises auf die Patenterteilung: **16.07.1997**
(21) Anmeldenummer: 95113812.2
(22) Anmeldetag: 02.09.1995
(51) Int. Cl.: C03C 17/34, C03C 17/25

(54) **Verfahren zur pyrolytischen Beschichtung von Glas-, Glaskeramik- und Emailprodukten**
Method for pyrolytic coating of glass, glass-ceramic and enamel articles
Procédé de revêtement pyrolytique d'articles en verre, vitrocéramique et émail

(30) Priorität: 17.09.1994 DE 4433206
(43) Veröffentlichungstag der Anmeldung: 20.03.1996
(73) Patentinhaber: Th. Goldschmidt AG, 45127 Essen (DE)
(72) Erfinder: Krohm, Hans-Günther, D-46348 Raesfeld (DE); Vallerien, Sven-Uwe, Dr., D-45239 Essen (DE)

(56) Entgegenhaltungen:
- EP-A- 0 521 602
- WO-A-93/12934

## Beschreibung

Die Erfindung betrifft ein Verfahren zur Herstellung von pyrolytischen Schichten auf Glas, Glaskeramik und Email unter Verringerung der optischen Irisationsintensität bei Zinnoxidschichten.

Die Beschichtung von Substraten mit Zinnoxiden ist bekannt; dabei wird sowohl der elektrische Widerstand der so beschichteten Oberfläche herabgesetzt als auch die Infrarotreflexion erhöht. Technisch werden diese physikalischen Eigenschaften genutzt für Wärmeschutzverglasungen oder auch zum flächigen Beheizen von Scheiben, z.B. Autoscheiben, Kühlthekenverglasungen.

Zur Erzeugung derartiger Schichten werden geeignete Zinnverbindungen (Basisverbindungen), vorzugsweise gleichzeitig mit einem Dotierungsmittel, in Kontakt mit der auf 400 - 800 °C erhitzten Glasoberfläche gebracht. Die Basiszinnverbindung bildet eine zusammenhängende Zinn(IV)oxidschicht auf der Oberfläche des Glases, der Glaskeramik oder der Emaillierung aus. Insbesondere Fluor als Dotierungsmittel erhöht die elektrische Leitfähigkeit und bewirkt die hohe Infrarotreflexion. Das Aufsprühen geeigneter zinn- und fluorhaltiger Lösungen ist zur Aufbringung der mit Fluor dotierten Zinnoxidschichten auf die Oberflächen besonders einfach. Beispiele sind hierfür DE-OS 22 46 193, DE-OS 39 15 232 und EP-A-0 318 486. Zum Beispiel werden organische Lösungen von Umsetzungsprodukten der Trifluoressigsäure mit Alkylzinnoxiden auf die auf 400 - 700 °C erhitzte Glas- oder Keramikoberfläche aufgebracht, um damit einen optimalen Flächenwiderstandswert und IR-Reflexion zu ermöglichen (DE-OS 39 15 232). Des weiteren können auch organische Lösungen von Monobutylzinntrichlorid mit Zinn(II)fluorid als Dotierungsmittel verwendet werden (DE-OS 37 35 574).

In Abhängigkeit von der Schichtdicke dieser halbleitenden Schichten kommt es hierbei zu optischen Irisationsfarben. Zur Vermeidung solcher Effekte sind in der Literatur verschiedene Verfahren beschrieben.

In der US-PS 3 378 396 ist ein Verfahren beschrieben, bei dem der Brechungsindex der Schicht mittels eines zunächst hohen Siliciumdioxidgehaltes kontinuierlich gesteigert wird durch Erhöhung des Zinnoxidanteils, bis man schließlich bei reinen Zinnoxidschichten angelangt ist. Der Brechungsindex ändert sich dabei von einem Wert von 1,5 an der Glasoberfläche zu 2,0 an der Grenzfläche Zinnoxidschicht/Luft. Dabei werden Silicium- und Zinntetrachlorid verwendet. Dies kann technisch nicht zufriedenstellen, da hiermit eine Beschichtung während der Glasfertigung nicht möglich oder technisch sehr aufwendig und teuer wäre.

In der US-PS 4 187 336 ist ein Verfahren beschrieben, bei dem eine oder mehrere Zwischenschichten zwischen dem Glassubstrat und der elektrisch leitfähigen Zinnoxidschicht mit Hilfe eines atmosphärischen CVD-Prozesses (Chemical Vapour Deposition) aufgedampft werden. Dabei enthält die Zwischenschicht Siliciumdioxid als Bestandteil; als Precursor werden bestimmte Silane, Dimethylsilane, Diethylsilane, Tetramethylsilane und Siliciumhalogenide genannt. Die Schichtbildungsgeschwindigkeit dieses Verfahrens liegt im Bereich 10 - 20 Angström/Sekunde und kann deshalb nicht kommerziell genutzt werden, da hierfür weitaus höhere Geschwindigkeiten vonnöten sind.

In der US-PS 4 386 117 ist ein Prozeß zur Herstellung gemischter Silicium-/Zinnoxidschichten zur Erreichung von gezielten oder sich kontinuierlich ändernden Brechungsindizes beschrieben. Hierbei können technisch akzeptable Aufwachsraten von etwa 100 Angström/Sekunde erzielt werden. Allerdings werden als Ausgangsverbindungen Alkoxyperalkylsilane, wie z.B. Methoxypentamethyldisilan oder Dimethoxytetramethyldisilan verwendet, diese Substanzen sind allerdings schwer zu handhaben und kommerziell nicht verfügbar.

In der US-PS 5 028 566 wird ein Weg zur Erzielung von Siliciumdioxidschichten auf Substraten beschrieben, der auf der Verwendung von Tetraethylorthosilicat (TEOS) oder auch von 2,4,6,8-Tetramethylcyclotetrasiloxan beruht. Dabei werden auch die Schwierigkeiten der Dotierung des Films mit Phosphor und der geregelten Verfügbarkeit infolge des niedrigen Dampfdrucks von TEOS bei der Niederdruck-CVD dargestellt.

In der Literatur gibt es weitere Beschreibungen zur Erreichung einer dotierten Siliciumdioxidschicht mittels Niederdruck-CVD, z.B. D. S. Williams und E. A. Dein, J. Electrochem. Soc. 134, 657 - 664 oder auch F. S. Becker und S. Röhl, J. Electrochem. Soc. 134, 2923 - 2931 (1987). In diesen Publikationen wird die Herstellung von Borsilicatglasschichten auf Substraten ausgehend von TEOS und Trimethylborat sowie Trimethylphosphit behandelt.

Diethylsilane als Basis werden beschrieben in A. K. Hochberg und D. L. O'Meara, J. Electrochem. Soc. 136, 1843 - 1844 (1989). In der WO 93/12934 und in der WO 93/13393 sind Verfahren zur Erreichung gemischter Silicium-/Zinnoxidschichten beschrieben, die als Precursor Monobutylzinntrichlorid, TEOS und als Beschleuniger bei der Schichtbildung Organophosphite und Organoborate verwenden. Dabei können bei atmosphärischem Druck und einer Temperatur von 200 °C Aufwachsraten einer gemischten Silicium-/Zinnoxidschicht von etwa 300 Angström/Sekunde auf Glas erzielt werden. Nachteil dieser Verfahren ist jedoch der hohe apparative Aufwand, insbesondere im Hinblick auf die Konstanthaltung der Bedingungen zur Schichtbildung, da die Komponenten in Gasform aufgetragen werden und hierbei vier Gasströme genau dosiert und aufeinander abgestimmt werden müssen.

Es bestand daher ein Bedarf nach einem Verfahren, welches in einfacher Weise die Erzeugung weitestgehend irisationsfreier Zinnoxidschichten ermöglicht. Ein solches Verfahren wird durch die Erfindung bereitgestellt. Dabei wird auf die heiße Oberfläche zunächst eine Schicht aufgebracht, die die Oxide der Elemente Bor, Silicium und Zinn sowie gegebenenfalls Phosphor enthält. Diese Schicht besitzt einen Brechungsindex, der zwischen dem Wert der Glasoberfläche und der dotierten Zinnoxidschicht liegt.

Anschließend wird in einem zweiten Schritt in an sich üblicher Weise eine mit Fluor dotierte, zinnhaltige Lösung, wie z.B. Monobutylzinntrichlorid in Ethanol mit Zinn(II)-fluorid als Dotierungsmittel (DE-A-37 35 574), auf die noch heiße oder wiederum erhitzte Glasoberfläche aufgesprüht.

Die so vergütete Glasoberfläche weist eine hohe Infrarotreflexion im Wellenlängenbereich zwischen 2 µm und 15 µm sowie eine gute elektrische Oberflächenleitfähigkeit auf. Diese technischen Funktionswerte der so erzielten Zinnoxidschichten sind also im Vergleich zur konventionell ohne Zwischenschicht aufgebrachten Beschichtung mindestens gleichwertig.

Überraschenderweise zeigen die Glasscheiben aber eine deutlich verminderte Farbintensität der optischen Irisation bei gleichzeitig hohen Funktionswerten der dotierten Zinnoxidschicht.

Gegenstand der Erfindung ist somit ein Verfahren zur Erzeugung von elektrisch leitfähigen und infrarotreflektierenden Zinnoxidschichten auf Glas, Glaskeramik und Email mit verringerter optischer Irisationsintensität, welches dadurch gekennzeichnet ist, daß man auf die zu beschichtende heiße Oberfläche
- zunächst eine Lösung von Bor-, Silicium-, Zinn- und gegebenenfalls Phosphorverbindungen in Wasser und/oder organischen Lösungsmitteln aufbringt und daraus pyrolytisch eine Schicht aus Oxiden dieser Elemente erzeugt, deren Brechungsindex zwischen dem des zu beschichtenden Substrats und dem der Zinnoxidschicht liegt, und
- auf diese Schicht in an sich bekannter Weise pyrolytisch eine Zinnoxidschicht aufbringt.

Bevorzugt wird eine mit Fluor dotierte Zinnoxidschicht verwendet. Bevorzugt wird dabei die erste Schicht in einer Dicke von 50 nm - 1,5 µm aufgebracht, wobei für beide Schichten eine Gesamtschichtdicke von 100 nm bis 2 µm vorteilhaft ist.

Gegenstand der Erfindung ist ferner eine Lösung zur pyrolytischen Aufbringung einer irisationsmindernden Schicht auf Glas, Glaskeramik und Email, bestehend aus
- 4 - 35 Gewichtsteilen: einer oder mehrerer Siliciumverbindungen,
- 1 - 27 Gewichtsteilen: einer oder mehrere Borverbindungen,
- 8 - 43 Gewichtsteilen: einer oder mehrerer Zinnverbindungen,
- 0 - 35 Gewichtsteilen: einer oder mehrerer Phosphorverbindungen sowie
- 30 - 86 Gewichtsteilen: eines organischen Lösungsmittels oder Lösungsmittelgemisches und/oder Wasser.

Als siliciumhaltige Verbindungen sind dabei insbesondere geeignet:
Kieselsäuretetraethylester, Polydimethylsiloxane mit einer mittleren Kettenlänge bis zu 100 Monomereinheiten sowie alkylmodifizierte Derivate sowie sie enthaltende Copolymere, cyclische Polydimethylsiloxane, Hexafluorokieselsäure oder auch Mischungen dieser Substanzen.

Als borhaltige Verbindungen sind beispielsweise geeignet:
Borsäure, Trimethylborat, Triethylborat, Tripropylborat oder Tributylborat, Hexafluoroborsäure sowie Mischungen dieser Verbindungen.

Als zinnhaltige Verbindungen sind beispielsweise geeignet:
Zinntetrachlorid, Alkylzinntrichlorid (z.B. Monobutylzinnchlorid), Dialkylzinndichlorid (z.B. Dibutylzinndichlorid), Monoalkylzinnoxid (z.B. Monobutylzinnoxid), Dialkylzinnoxid (z.B. Dibutylzinnoxid), Monoalkylzinntricarboxylate (Monobutylzinnacetat), Dialkylzinndicarboxylate (z.B. Dibutylzinnacetat), Trialkylzinncarboxylat (Tributylzinnacetat), wäßrige, alkoholische oder ketonische Zinn(IV)säuresole oder Mischungen o.g. zinnhaltiger Verbindungen.

Als Phosphorverbindungen sind beispielsweise geeignet:
Phosphorige Säure und ihre Di- und Trialkylester (Methyl, Ethyl, Butyl und Octyl), Orthophosphorsäure und ihre Alkylester (Methyl, Ethyl, Butyl und Octyl), lineare und cyclische Polyphosphate, oder auch Mischungen o.g. phosphorhaltiger Verbindungen.

Als organische Lösungsmittel kommen in Frage:
Alkohole (Methanol, Ethanol, Isopropanol, Butanol), Ketone (Aceton, Methylethylketon, Methylisobutylketon), Ester (Essigsäureethylester, Essigsäurebutylester) und/oder Wasser.

Bei der Auswahl der Verbindungen ist die Verträglichkeit der Komponenten untereinander zu beachten. Die technischen Bedingungen, wie z.B. Sprühapparatur, Glastemperatur oder Produktionsgeschwindigkeit, bestimmen die Art und Konzentration der eingesetzten Stoffe in dieser Primerlösung.

Phosphorverbindungen müssen nicht in jedem Fall zugesetzt werden, jedoch empfiehlt sich deren Zugabe bei chemischer Verträglichkeit. Insbesondere bei Dialkylzinnverbindungen sind unerwünschte chemische Reaktionen möglich. Die Anwesenheit der Phosphorverbindung ist wünschenswert, um eine optimale Wirkung bei der Irisationsdämpfung zu erhalten, ist jedoch nicht in jedem Fall zwingend.

Die Zubereitung der Lösung erfolgt in einfacher Weise durch Mischung in einem geeigneten Rührgefäß, wobei darauf zu achten ist, daß sich die Lösung nicht zu sehr erhitzt und keine Ausfällungen auftreten. Idealerweise sollte die Temperatur deutlich unterhalb des Siedepunktes des Lösemittels gehalten werden.

Die Anteile der Lösungskomponenten können, wie angegeben, in einem weiten Bereich schwanken. Die Bestandteile müssen jedoch jeweils in ausreichendem Maße enthalten sein, um den Ansprüchen einer technischen Applikation, wie z.B. Dosierbarkeit und Versprühbarkeit, zu genügen.

Die Auswahl richtet sich dabei nach der Art und Zusammensetzung des zu beschichtenden Substrats und den technischen Beschichtungsbedingungen. Die Auswahl der Komponenten für die Sprühlösung richtet sich ferner insbesondere danach, daß der Brechungsindex der aus dieser Lösung erhaltenen metalloxidischen Zwischenschicht zwischen dem Wert des Brechungsindex des verwendeten Substrats und der dotierten Zinnoxidschicht liegt. Für die Beschichtung von kommerziellem Kalknatronglas empfiehlt sich z.B. die Erzielung eines Brechungsindex der metalloxidischen Zwischenschicht zwischen Werten von 1,65 und 1,72. Dies gewährleistet bei Verwendung einer mit Fluor dotierten Zinnoxidschicht eine optimale Dämpfung der optischen Irisation.

Geeignete Lösungen sind beispielsweise:
1.
   - 11 - 18,5 %: Dibutylzinndiacetat
   - 12 - 8 %: Borsäure
   - 16,6 - 9,5 %: Tegopren® 5863 (Produkt der Th. Goldschmidt AG: Polyether-Polydimethylsiloxan-Copolymer)
   - 60,4 - 64 %: Ethanol
2.
   - 11 - 18,5 %: Dibutylzinndiacetat
   - 29,7 - 44,6 %: Borsäuretributylester
   - 4,8 - 8,3 %: Tegiloxan® 3 (Produkt der Th. Goldschmidt AG: Polydimethylsiloxan)
   - 54,5 - 28,6 %: Essigsäureethylester
3.
   - 9,6 - 14,7 %: Butylzinntrichlorid
   - 29,7 - 44,6 %: Borsäuretributylester
   - 16,6 - 9,5 %: Tegopren® 5863
   - 44,1 - 31,2 %: Ethanol
4.
   - 9,6 - 14,7 %: Butylzinntrichlorid
   - 12 - 8 %: Borsäure
   - 16,6 - 9,5 %: Tegopren® 5863
   - Rest: H₂O

Zur Durchführung des erfindungsgemäßen Beschichtungsverfahrens wird die erfindungsgemäße Zubereitung im Sprühzerstäubungsverfahren auf die zuvor erhitzten Oberflächen aufgesprüht. Das Substrat soll dabei eine Temperatur von 400 - 800 °C haben, jedoch muß die Temperatur unterhalb seiner jeweiligen Schmelz- bzw. Erweichungstemperatur liegen. Dabei entsteht auf der heißen Oberfläche durch Oxidation und thermische Zersetzung eine dünne Schicht aus Metalloxiden der eingesetzten Metallkomponenten. Das Lösungsmittel verdampft oder zersetzt.

In einem anschließenden Schritt wird dann in an sich bekannter Weise eine mit Fluor dotierte zinnhaltige Lösung auf diese Primerschicht aufgesprüht.

Durch Pyrolyse wird somit auf dieser Oberflächenprimerbeschichtung dann eine mit Fluor dotierte Zinnoxidfunktionsschicht erzeugt. Die Dicke dieser beiden Beschichtungen kann jeweils zwischen 100 nm und 2 µm durch die Mengendosierung der aufgesprühten Lösungen variiert werden.

Die nach dem erfindungsgemäßen Verfahren hergestellten Schichten zeichnen sich durch eine hohe Transparenz für das sichtbare Licht aus (75 bis 88 %). Die integrale Infrarotreflexion im Wellenlängenbereich zwischen 2,5 und 15 µm liegt im Bereich von 50 % bis über 80 %.

Zur weiteren Erläuterung der Erfindung sind die nachfolgenden Beispiele aufgeführt. Die Lösungen wurden jeweils frisch angesetzt, da nach mehrtägigem Stehenlassen bei einigen Lösungen Ausflockungen auftreten können.

### Beispiel 1

1. Lösung (Sprühmenge 15 ml):
   - 11,3 %: Dibutylzinndiacetat
   - 8,7 %: Borsäure
   - 2,5 %: Tegiloxan® 3 (Produkt der Th. Goldschmidt AG: Polydimethylsiloxan)
   - 77,5 %: Methanol
2. Lösung (Sprühmenge 5 ml)
   Tego® EffectCoat OTN3-5 (Produkt der Th. Goldschmidt AG: mit Fluor dotierte Organozinnverbindung in alkoholischer Lösung)

Die Lösungen werden auf eine Flachglasscheibe (160 mm × 180 mm × 6 mm), die zuvor 5 Minuten lang bei einer Ofentemperatur von ca. 700 °C aufgeheizt und mittels einer Hub-Drehvorrichtung in eine Sprühkabine mit Absaugung eingebracht wurde, aufgesprüht.

Die auf diese Weise mit einer Walther-Handsprühpistole (Düsendurchmesser 0,8 mm, Sprühdruck 1,5 bar, Sprühabstand ca. 35 cm) unmittelbar aufeinanderfolgend beschichtete Glasplatte weist bei o.g. Sprühmengen folgende Werte nach dem Erkalten auf:
- Flächenwiderstand:: 55 Ohm/Quadrat
- IR-Reflexion:: 59 % (integrale Reflexion im Wellenlängenbereich von 2 µm bis 15 µm)
- Irisationsdmäpfung:: 1

Die Unterdrückung der optischen Irisationsfarben wird anhand von Durchsicht auf dunklem Karton und Reflexion visuell beurteilt. Die Einstufung der Bewertung erfolgt in sechs Wertungsstufen (1 = sehr gut, 2 = gut, bis zu 6 = ungenügend)

### Beispiel 2

1. Lösung (Sprühmenge 15 ml):
   - 11,3 %: Dibutylzinndiacetat
   - 8,7 %: Borsäure
   - 5 %: Tegiloxan® 3
   - 75 %: Methanol
2. Lösung (Sprühmenge 5 ml)
   Tego® EffectCoat OTN3-5

Auftragsverfahren wie in Beispiel 1.
- Flächenwiderstand:: 43 Ohm/Quadrat
- IR-Reflexion:: 63 %
- Irisationsdämpfung:: 1

### Beispiel 3

1. Lösung (Sprühmenge 15 ml):
   - 11,3 %: Dibutylzinndiacetat
   - 8,7 %: Borsäure
   - 5 %: Tegopren® 5863 (Produkt der Th. Goldschmidt AG: Polyether-Polydimethylsiloxan-Copolymer)
   - 5 %: Trimethylphosphit
   - 70 %: Methanol
2. Lösung (Sprühmenge 15 ml)
   Tego® EffectCoat OTN3-5

Auftragsverfahren wie in Beispiel 1.
- Flächenwiderstand:: 10 Ohm/Quadrat
- IR-Reflexion:: 86 %
- Irisationsdämpfung:: 2

### Beispiel 4

1. Lösung (Sprühmenge 15 ml):
   - 6,2 %: Dibutylzinndiacetat
   - 13,8 %: Borsäure
   - 5 %: Kieselsäuretetraethylester
   - 75 %: Methanol
2. Lösung (Sprühmenge 5 ml (a) oder 10 ml (b))
   Tego® EffectCoat OTN3-5

Auftragsverfahren wie in Beispiel 1.
- Flächenwiderstand:: 46 Ohm/Quadrat für (a),
23 Ohm/Quadrat für (b)
- IR-Reflexion:: 53 % für (a),
66 % für (b)
- Irisationsdämpfung:: 1 für (a) und auch für (b)

### Beispiel 5

1. Lösung (Sprühmenge 15 ml):
   - 11,3 %: Monobutylzinntriacetat
   - 8,7 %: Borsäure
   - 1 %: Tegiloxan® 3
   - 79 %: Methanol
2. Lösung (Sprühmenge 5 ml)
   Tego® EffectCoat OTN3-5

Auftragsverfahren wie in Beispiel 1.
- Flächenwiderstand:: 49 Ohm/Quadrat
- IR-Reflexion:: 59 %
- Irisationsdämpfung:: 1

### Beispiel 6

1. Lösung (Sprühmenge 15 ml):
   - 7 %: Dibutylzinndiacetat
   - 43 %: Borsäuretributylester
   - 5 %: Tegopren® 5863
   - 45 %: Methanol
2. Lösung (Sprühmenge 15 ml)
   Tego® EffectCoat OTN3-5

Auftragsverfahren wie in Beispiel 1.
- Flächenwiderstand:: 10 Ohm/Quadrat
- IR-Reflexion:: 88 %
- Irisationsdämpfung:: 1 - 2

### Beispiel 7

1. Lösung (Sprühmenge 15 ml):
   - 10 %: Monobutylzinntrichlorid
   - 5,0 %: Tegopren® 5863
   - 8,7 %: Dimethylphosphit
   - 3,3 %: Borsäure
   - 63,3 %: Ethanol
   - 9,7 %: Wasser
2. Lösung (Sprühmenge 15 ml)
   Tego® EffectCoat OTN3-5

Auftragsverfahren wie in Beispiel 1.
- Flächenwiderstand:: 12 Ohm/Quadrat
- IR-Reflexion:: 83 %
- Irisationsdämpfung:: 3

Als Vergleichsbeispiele ohne Primerschicht dienen:

### Beispiel 8

1. Lösung -
2. Lösung (Sprühmenge 15 ml)
   Tego® EffectCoat OTN3-5

Auftragsverfahren analog Beispiel 1.
- Flächenwiderstand:: 13 Ohm/Quadrat
- IR-Reflexion:: 82 %
- Irisationsdämpfung:: 6

### Beispiel 9

1. Lösung -
2. Lösung (Sprühmenge 8 ml)
   Tego® EffectCoat OTN3-5

Auftragsverfahren analog Beispiel 1.
- Flächenwiderstand:: 32 Ohm/Quadrat
- IR-Reflexion:: 46 %
- Irisationsdämpfung:: 6

## Patentansprüche

1. Verfahren zur Erzeugung von elektrisch leitfähigen und infrarotreflektierenden Zinnoxidschichten auf Glas, Glaskeramik und Email mit verringerter optischer Irisationsintensität, dadurch gekennzeichnet, daß man auf die zu beschichtende heiße Oberfläche
- zunächst eine Lösung von Bor-, Silicium-, Zinn- und gegebenenfalls Phosphorverbindungen in Wasser und/oder organischen Lösungsmitteln aufbringt und daraus pyrolytisch eine Schicht aus Oxiden dieser Elemente erzeugt, deren Brechungsindex zwischen dem des zu beschichtenden Substrats und dem der Zinnoxidschicht liegt, und
- auf diese Schicht in an sich bekannter Weise pyrolytisch eine Zinnoxidschicht aufbringt.

2. Verfahren gemäß Anspruch 1, dadurch gekennzeichnet, daß man die erste Schicht in einer Dicke von 50 nm bis 1,5 µm aufbringt.

3. Verfahren gemäß Anspruch 2, dadurch gekennzeichnet, daß man beide Schichten in einer Gesamtschichtdicke von 100 nm bis 2 µm aufbringt.

4. Verfahren gemäß Anspruch 3, dadurch gekennzeichnet, daß man die Zinnoxidschicht in Kombination mit einem Dotierungsmittel, insbesondere einem fluorhaltigen Dotierungsmittel, aufbringt.

5. Lösung zur pyrolytischen Aufbringung einer irisationsmindernden Schicht auf Glas, Glaskeramik und Email, bestehend aus
4 - 35 Gewichtsteilen einer oder mehrerer Siliciumverbindungen,
1 - 27 Gewichtsteilen einer oder mehrerer Borverbindungen,
8 - 43 Gewichtsteilen einer oder mehrerer Zinnverbindungen,
0 - 35 Gewichtsteilen einer oder mehrerer Phosphorverbindungen sowie
30 - 86 Gewichtsteilen eines organischen Lösungsmittels und/oder Wasser.

## Claims

1. Process for the production of electroconductive and infrared-reflective tin-oxide layers of reduced optical iridescence intensity on glass, glass-ceramic and enamel, characterized in that
- firstly a solution of compounds of boron, silicon, tin and optionally phosphorus in water and/or organic solvents is applied to the hot surface to be coated, and a layer of oxides of these elements whose refractive index is between that of the substrate to be coated and that of the tin-oxide layer is produced pyrolytically, and
- a tin-oxide layer is applied pyrolytically to this layer in a manner known per se.

2. Process according to Claim 1, characterized in that the first layer is applied in a thickness of from 50 nm to 1.5 µm.

3. Process according to Claim 2, characterized in that the two layers are applied in a total layer thickness of from 100 nm to 2 µm.

4. Process according to Claim 3, characterized in that the tin-oxide layer is applied in combination with a dopant, in particular a fluorine-containing dopant.

5. Solution for the pyrolytic application of an iridescence-reducing layer on glass, glass-ceramic and enamel, comprising
4 - 35 parts by weight of one or more silicon compounds,
1 - 27 parts by weight of one or more boron compounds,
8 - 43 parts by weight of one or more tin compounds,
0 - 35 parts by weight of one or more phosphorus compounds, and
30 - 86 parts by weight of an organic solvent and/or water.

## Revendications

1. Procédé de fabrication de couches d'oxyde d'étain électroconductrices et réfléchissant les rayons infrarouges, sur le verre, la vitrocéramique et l'émail, avec une intensité réduite de l'irisation optique, caractérisé en ce que, sur la surface chaude à revêtir :
- on applique d'abord une solution de composés du bore, du silicium, de l'étain et éventuellement du phosphore, dans de l'eau et/ou dans des solvants organiques, et à partir de cette solution, on produit, par pyrolyse, une couche d'oxydes de ces éléments, dont l'indice de réfraction est compris entre celui du substrat à revêtir et celui de la couche d'oxyde d'étain, et
- on applique une couche d'oxyde d'étain, par pyrolyse, d'une manière connue en soi, sur cette couche.

2. Procédé selon la revendication 1, caractérisé en ce qu'on applique la première couche à une épaisseur de 50 nm à 1,5 µm.

3. Procédé selon la revendication 2, caractérisé en ce qu'on applique les deux couches à raison d'une épaisseur totale de 100 nm à 2 µm.

4. Procédé selon la revendication 3, caractérisé en ce qu'on applique la couche d'oxyde d'étain conjointement avec un dopant, en particulier un dopant fluoré.

5. Solution pour l'application pyrolytique d'une couche réduisant l'irisation sur du verre, la vitrocéramique et l'émail, formée de :
4-35 parties en poids d'un ou plusieurs composés du silicium,
1-27 parties en poids d'un ou plusieurs composés du bore,
8-43 parties en poids d'un ou plusieurs composés de l'étain,
0-35 parties en poids d'un ou plusieurs composés du phosphore, ainsi que
30-86 parties en poids d'un solvant organique et/ou d'eau.
